# EUROPÄISCHE PATENTSCHRIFT

(11) **EP 2 125 439 B1**
(45) Veröffentlichungstag und Bekanntmachung des Hinweises auf die Patenterteilung: **12.10.2011**
(21) Anmeldenummer: 08707862.2
(22) Anmeldetag: 11.01.2008
(51) Int. Cl.: B60R 16/03, G05F 1/10, H02J 7/00

(54) **VORRICHTUNG, SYSTEM UND VERFAHREN ZUR VERRINGERUNG EINES RUHESTROMVERBRAUCHES EINES KRAFTFAHRZEUGES**
DEVICE, SYSTEM AND METHOD FOR REDUCING THE CONSUMPTION OF CLOSED-CIRCUIT CURRENT OF A MOTOR VEHICLE
DISPOSITIF, SYSTÈME ET PROCÉDÉ POUR LA RÉDUCTION D'UN COURANT DE REPOS D'UNE AUTOMOBILE

(30) Priorität: 23.01.2007 DE 102007003424
(43) Veröffentlichungstag der Anmeldung: 02.12.2009
(73) Patentinhaber: Continental Automotive GmbH, 30165 Hannover (DE)
(72) Erfinder: BOLZ, Stephan, 93102 Pfatter (DE)
(86) Internationale Anmeldenummer: PCT/EP2008/050276
(87) Internationale Veröffentlichungsnummer: WO 2008/090035

(56) Entgegenhaltungen:
- EP-A- 0 492 103
- DE-A1- 10 149 282

## Beschreibung

Die vorliegende Erfindung betrifft eine Vorrichtung, ein System mit einer solchen Vorrichtung und ein Verfahren zur Verringerung eines Ruhestromverbrauches eines Kraftfahrzeuges.

Das Dokument EP 0 492 103 a offenbart den Oberbegriff das Anspruchs 1.

Bei einem Stillstand des Kraftfahrzeuges erfolgt die Versorgung des Bordnetzes des Kraftfahrzeuges aus dessen Batterie. Besonders bei längerem Stillstandzeiten, im Folgenden auch Standby-Betrieb des Kraftfahrzeuges genannt, von mehreren Tagen oder Wochen wird hierbei die Batterie des Kraftfahrzeuges stetig entladen, sodass die Batterie ab einem gewissen Zeitpunkt nicht mehr genügend Restladung für einen Motorstart aufweist.

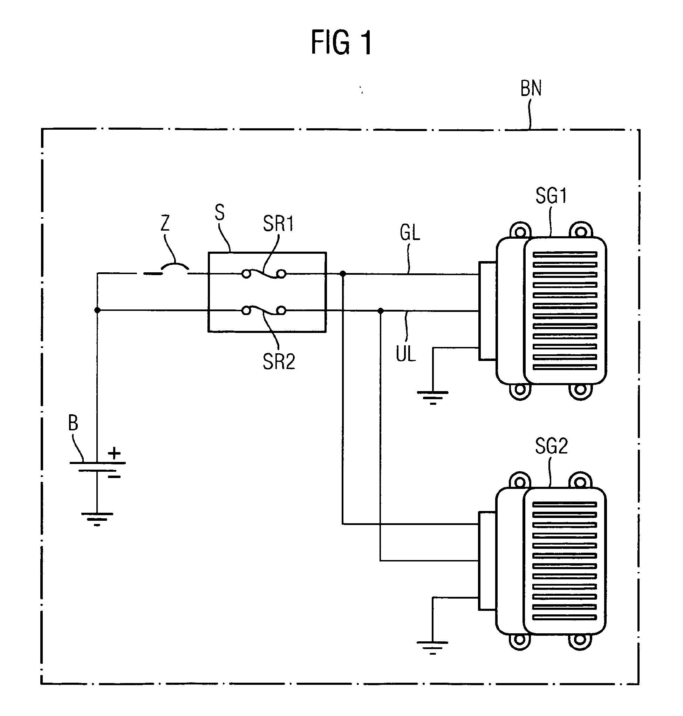

Dazu zeigt Fig. 1 ein schematisches Blockschaltbild eines Bordnetzes BN eines Kraftfahrzeuges zur Versorgung mehrerer Steuergeräte SG1, SG2. Dabei speist eine 12V-Batterie B über den Zündungsschalter Z und eine im Sicherungskasten S untergebrachte Sicherung SR1 über die geschaltete Versorgungsleitung GL mehrere Steuergeräte SG1, SG2. Zugleich werden die Steuergeräte SG1, SG2 über eine zweite Sicherung SR2 und die ungeschaltete Leitung UL versorgt. Die ungeschaltete Leitung UL dient auch zur Versorgung der Steuergeräte SG1, SG2 im Standby-Betrieb des Kraftfahrzeuges. Der Stromrückfluss erfolgt über das Chassis des Kraftfahrzeuges.

Durch die fortschreitende Elektrisierung der Kraftfahrzeuge sowie durch die Einführung neuer Funktionen oder Funktionalitäten ist im Kraftfahrzeug eine Vielzahl von microcontrollerbasierten Steuergeräten hinzugekommen. Ein typisches Mittelklassefahrzeug weist zum Zeitpunkt der vorliegenden Anmeldung mittlerweile etwa fünfzig solcher Steuergeräte auf. Etliche dieser Steuergeräte müssen auch bei abgestelltem Fahrzeug beziehungsweise im Standby-Betrieb des Fahrzeuges zumindest eine eingeschränkte Funktionalität beibehalten. Beispiele hierfür sind die Wegfahrsperre oder Funkschließsysteme. Diese benötigen auch im Standby-Betrieb zumindest eine Überwachungsfunktion, welche Strom benötigt.

Aufgrund des benötigten Stromes solcher Steuergeräte auch im Standby-Betrieb hat ein solches Steuergerät auch im Standby-Betrieb eine nennenswerte Stromaufnahme, beispielsweise im Bereich von 2 bis 20 mA. In Folge der Vielzahl der Steuergeräte in einem Kraftfahrzeug kann sich die Gesamtstromaufnahme aller Stromverbraucher beziehungsweise Steuergeräte im Standby-Betrieb in einem Kraftfahrzeug auf 50 bis 200 mA belaufen. Bei einer Speicherfähigkeit einer Starterbatterie von herkömmlich 50 bis 100 Ah und einer notwendigen Restladung für den Motorstart von beispielsweise 20 Prozent, ergibt sich daraus eine maximale Stillstandszeit von 17 bis 33 Tagen für das Kraftfahrzeug. Folglich ist bei einem Fahrzeug mit einer höheren Gesamtstromaufnahme auch eine größere Batterie einzusetzen, was nachteiligerweise erhöhte Kosten und einen erhöhten Platzbedarf im Motorraum des Kraftfahrzeuges bedarf. Setzt man keine größere Batterie ein, so kommt das nachteiligerweise zu deutlichen Schwächen beim Start des Kraftfahrzeuges nach einer längeren Stillstandszeit.

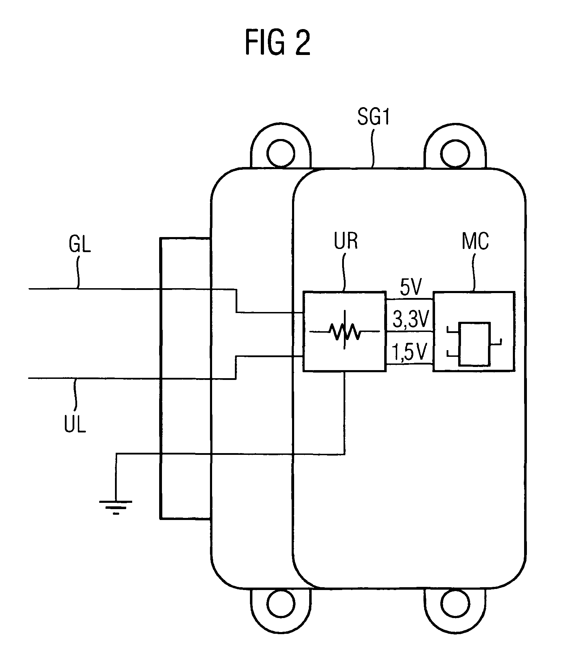

Weiter ist zur Illustrierung der der vorliegenden Erfindung zugrunde liegenden Problematik in Figur 2 ein schematisches Blockschaltbild eines Steuergerätes SG1 mit einem Spannungsregler UR und einem Mikrocontroller MC dargestellt. Ein Mikrocontroller MC eines modernen Steuergerätes SG1 benötigt neben einer 5 V Versorgung noch weitere Betriebsspannungen, zum Beispiel 3,3 V und 1,5 V, wobei im Normalbetrieb die Stromaufnahmen bei den kleineren Spannungen mehrere 100 mA betragen können. Diese Betriebsspannungen werden in der Regel von einem als regelbarer Widerstand arbeitenden linearen Spannungsregler UR erzeugt. Abhängig von der maximalen Umgebungstemperatur am Einbauort des Steuergerätes SG1 ist es jedoch schwierig und technisch aufwändig die an dem aus einer Spannung von regelmäßig 12 V versorgten Linearregler SR anfallende Verlustleistung abzuführen.

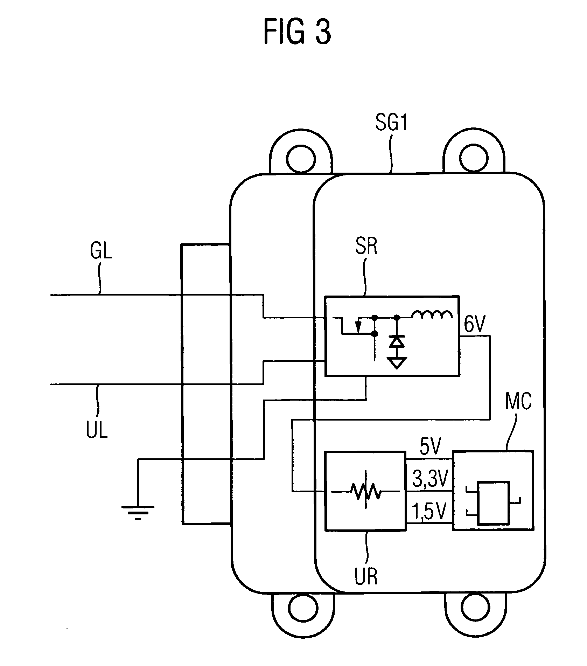

Gegebenenfalls muss dem Spannungsregler UR ein Schaltregler SR - wie in Figur 3 gezeigt - mit hohem Wirkungsgrad vorgeschaltet werden, wobei die relativ ungenaue Ausgangsspannung des Schaltreglers SR der minimal erforderlichen Eingangsspannung des Linearreglers SR entspricht, dessen Ausgangsspannung wiederum den Genauigkeitsanforderungen des daraus versorgten Mikrocontrollers MC oder Mikrocontrollersystems entspricht. Dazu zeigt Fig. 3 ein schematisches Blockschaltbild eines Steuergerätes SG1 mit einem Schaltregler SR, einem Spannungsregler UR und einem Mikrocontroller MC. Eine solche Lösung ist allerdings infolge des jeweils anfallenden Schaltregler SR und des jeweils anfallenden Spannungsreglers UR für das entsprechende Steuergerät SG1 nachteiligerweise sehr kostenintensiv.

Vorstellbar wäre es weiter, den Schaltregler SR zur Verringerung des Standby-Stromes zu nutzen. Vom Prinzip her entspricht der Schaltregler SR einem Transformator für Gleichspannung. Abzüglich der Eigenverluste des Schaltreglers SR entspricht die Ausgangsleistung der Eingangsleistung. Wird also eine Eingangsspannung von 12 V auf eine Ausgangsspannung von 6 V herabgesetzt, so reduziert sich der Eingangsstrom auf die Hälfte des Ausgangsstromes. Dies entspricht einer Halbierung des im Standby-Betrieb aus der Batterie B entnommenen Stromes, wodurch sich die Stillstandzeit des Fahrzeuges annähernd verdoppeln ließe. Diesem Lösungsansatz steht in der Praxis jedoch als wesentliches Hindernis entgegen, dass der Eigenstrombedarf eines solchen, für mehrere 100 mA ausgelegten Schaltreglers SR in der Größenordnung wie der Standby-Stromverbrauch des gesamten Steuergerätes SG1 liegt.

Alternativ kann sich die Anmelderin auch vorstellen, einen zusätzlichen, kleineren Schaltregler mit geringerem Eigenstrombedarf in dem jeweiligen Steuergerät SG1 einzubauen, der im Standby-Betrieb die Eingangsspannung des LinearReglers SR herabsetzt. Wegen der damit verbundenen Zusatzkosten für jedes Steuergerät SG1, insbesondere bei einer Vielzahl von Steuergeräten im Kraftfahrzeug, beispielsweise 50, ist jedoch auch diese Lösung sehr kostenintensiv und damit unwirtschaftlich.

Schließlich könnte sich die Anmelderin auch vorstellen, einen zentralen Schaltregler SR in das Fahrzeug oder Kraftfahrzeug einzubauen, der im Standby-Betrieb ausgangsseitig 6 V erzeugt. Solches würde aber die Verbindung sämtlicher Steuergeräte SG1, SG2 über zusätzliche Leitungen bedingen. Dies würde allerdings nachteiligerweise zu zusätzlichen Kosten und zu einem damit verbundenen Änderungsaufwand am Kabelbaum des Kraftfahrzeuges führen. Aus diesen Gründen ist es unwirtschaftlich, einen solchen Lösungsansatz zur Verlängerung der Stillstandszeit zu nutzen.

Insgesamt verbleiben zwei weitere Änderungsmöglichkeiten, nämlich eine Vergrößerung der Speicherkapazität der Starterbatterie sowie eine Verringerung der Ruhestromaufnahme.

Der Vergrößerung der Speicherkapazität der Starterbatterie stehen allerdings neben den Zusatzkosten zwei weitere Hindernisse entgegen. Zum einen das Hindernis des verfügbaren Bauraums und zum anderen das Hindernis des zusätzlichen Gewichtes. Moderne Fahrzeuge oder Kraftfahrzeuge werden unter dem Gesichtspunkt entwickelt, dass der umbaute Raum für die Passagiere zur Verfügung stehen soll und nicht für die Technik. Das Zusatzgewicht einer größeren Batterie schlägt sich letztendlich im Kraftstoffverbrauch nieder, sodass hier sehr enge Grenzen gesetzt sind. Im Übrigen sollte eine neu entwickelte Batterie leichter werden und nicht schwerer. Hinsichtlich der Verringerung der Ruhestromaufnahme ist es gängige Praxis, dass die Ruhestromaufnahme eines Steuergerätes mit jeder Generation abnehmen muss. Dem sind jedoch, bedingt durch die verwendete Halbleitertechnik der eingesetzten Mikrocontroller und durch das stetige Wachstum der Funktionsumfänge beziehungsweise der Funktionalitäten, Grenzen gesetzt. Zudem werden mit der Einführung neuer Funktionen auch neue Steuergeräte mit zusätzlichem Ruhestromverbrauch ins Fahrzeug eingeführt.

Insgesamt ist ein stetiges Wachstum der Ruhestromaufnahme im Kraftfahrzeug bei einer annähernd konstanten Batteriekapazität zu verzeichnen.

Demnach besteht eine Aufgabe der vorliegenden Erfindung darin, eine wesentliche Verlängerung der Stillstandszeit eines Kraftfahrzeuges, insbesondere eine Verdopplung der Stillstandszeit, bei einer Beibehaltung der Betriebsbereitschaft des Kraftfahrzeugs bereitzustellen.

Eine weitere Aufgabe besteht darin, eine wesentliche Verlängerung der Stillstandszeit eines Kraftfahrzeuges bei einer Beibehaltung der Betriebsbereitschaft des Kraftfahrzeuges ohne einen Eingriff an den Steuergeräten des Kraftfahrzeuges und/oder ohne einen Veränderung der Batterie oder des Kabelbaums bereitzustellen.

Weiter ist es eine Aufgabe, eine wesentliche Verlängerung der Stillstandszeit des Kraftfahrzeuges bei einer Beibehaltung der Betriebsbereitschaft des Kraftfahrzeuges mit einfachen technischen Mitteln bereitzustellen.

Erfindungsgemäß wird zumindest eine dieser gestellten Aufgaben durch eine Vorrichtung mit den Merkmalen des Patentanspruchs 1 und/oder durch ein System mit den Merkmalen des Patentanspruchs 13 und/oder durch ein Verfahren mit den Merkmalen des Patentanspruchs 14 gelöst.

Demnach wird eine Vorrichtung zur Verringerung eines Ruhestromverbrauches eines Kraftfahrzeuges vorgeschlagen, welches aufweist:
- eine erste Leitung (2), mittels welcher ein Zündungsschalter (3) und eine erste Klemme (4) koppelbar sind;
- eine zweite Leitung (5), mittels welcher eine Versorgungsspannungsvorrichtung (6) und eine zweite Klemme (7) koppelbar sind;
- einen Schaltregler (8), welcher in einem Signalpfad der zweiten Leitung (5) angeordnet ist;
- eine zu dem Schaltregler (8) parallel geschaltete, betätigbare Überbrückungseinrichtung (9), welche den Schaltregler (8) in Abhängigkeit eines ersten Steuersignals (S1) überbrückt; und
- eine Steuereinrichtung (10), welche das erste Steuersignal (S1) zum Betätigen der Überbrückungseinrichtung (9) in Abhängigkeit einer ersten Spannung (U1), die einer Potenzialdifferenz zwischen einem Potenzial an der ersten Klemme (4) und einem Massepotenzial entspricht, und/oder eines Stromwertes (I) des auf der zweiten Leitung (5) fließenden Stromes und/oder eines Zeitvorgabesignals (T) generiert.

Des Weiteren wird ein System zur Verringerung eines Ruhestromverbrauches eines Kraftfahrzeuges vorgeschlagen, das aufweist:
- eine wie oben näher beschriebene Vorrichtung;
- eine Versorgungsspannungsvorrichtung, welche mit der ersten Leitung und mit der zweiten Leitung der Vorrichtung gekoppelt ist; und
- einen Zündungsschalter, welcher zwischen der ersten Leitung der Vorrichtung und der Versorgungsspannungsvorrichtung angeordnet ist.

Weiterhin wird ein Verfahren zur Verringerung eines Ruhestromverbrauches eines Kraftfahrzeuges mit folgenden Schritten vorgeschlagen:
- Bereitstellen einer ersten Leitung, mittels welcher ein Zündungsschalter und eine erste Klemme koppelbar sind;
- Bereitstellen einer zweiten Leitung, mittels welcher eine Versorgungsspannungsvorrichtung und eine zweite Klemme koppelbar sind;
- Anordnen eines Schaltreglers in einem Signalpfad der zweiten Leitung;
- Parallel Schalten einer betätigbaren Überbrückungseinrichtung zu dem Schaltregler;
- Generieren eines ersten Steuersignals zum Betätigen der Überbrückungseinrichtung in Abhängigkeit einer ersten Spannung, die einer Potenzialdifferenz zwischen einem Potenzial an der ersten Klemme und einem Massepotenzial entspricht, und/oder eines Stromwertes des auf der zweiten Leitung fließenden Stromes und/oder eines Zeitvorgabesignals;
- Betätigen der Überbrückungseinrichtung mittels des generierten ersten Steuersignals; und
- Überbrücken des Schaltreglers mittels der betätigten Überbrückungseinrichtung.

Ein Vorteil der vorliegenden Erfindung liegt darin, dass der Schaltregler im Standby-Betrieb des Kraftfahrzeuges, welcher in Abhängigkeit der ersten Spannung und/oder des Stromwertes des auf der zweiten Leitung fließenden Stromes und/oder des Zeitvorgabesignals detektiert wird, nicht überbrückt ist und somit aufgrund seiner inhärenten Eigenschaften eine Verlängerung der Stillstandszeit des Kraftfahrzeuges durch ein Herabsetzen des Eingangsstromes des Schaltreglers und somit seiner Stromaufnahme bereitstellt. Die Ruhestromaufnahme der an der zweiten Klemme beziehungsweise der zweiten Leitung angeschlossenen Verbraucher oder Geräte wird durch das Herabsetzen des Eingangsstromes des Schaltreglers und damit der Stromaufnahme aus der Versorgungsspannungsvorrichtung oder Batterie minimiert. Erfindungsgemäß ergibt sich somit auch die Möglichkeit einer Verkleinerung der Versorgungsspannungsvorrichtung oder Batterie bei einer Beibehaltung der Stillstandszeit.

Außerdem ist erfindungsgemäß keine Änderung des Kabelbaumes oder der Batterie erforderlich. Die Einführung der erfindungsgemäßen Vorrichtung beziehungsweise des erfindungsgemäßen Systems in die laufende Fahrzeugfertigung ist einfach möglich, da die Erfindung als eine einzige abgeschlossene Vorrichtung ausgestaltet werden kann, die insbesondere als Sicherungskasten des Kraftfahrzeuges ausgebildet ist oder in dieser enthalten ist.

Durch die Verwendung von einfachen, kostengünstigen Schaltungen oder Vorrichtungen, wie dem Schaltregler, der Überbrückungseinrichtung und der Steuereinrichtung, ist die erfindungsgemäße Vorrichtung beziehungsweise das erfindungsgemäße System kostengünstig mit Standardbauelementen herstellbar. Vorteilhaft für die Fehlertoleranz der erfindungsgemäßen Vorrichtung beziehungsweise des erfindungsgemäßen Systems ist weiterhin, dass bei einer steigenden Stromaufnahme an der zweiten Klemme der Schaltregler mittels der Überbrückungseinrichtung einfach überbrückt wird.

Vorteilhafte Ausgestaltungen und Weiterbildungen der Erfindung ergeben sich aus den Unteransprüchen sowie der Beschreibung unter Bezugnahme auf die Zeichnungen.

Gemäß einer bevorzugten Ausgestaltung der Erfindung ist die Vorrichtung als ein Sicherungskasten oder eine Intelligent-Switching-Unit des Kraftfahrzeuges ausgebildet. Durch diese Ausgestaltung der Erfindung ist ein nachträglicher Einbau in ein Fahrzeug durch einen einfachen Tausch des Sicherungskastens möglich. Vorteilhafterweise wird somit auch ein zusätzliches Gehäuse vermieden, was eine Platzersparnis im Kraftfahrzeug zur Folge hat.

Gemäß einer weiteren bevorzugten Ausgestaltung ist die Überbrückungseinrichtung als ein betätigbares Relais ausgebildet.

Gemäß einer weiteren bevorzugten Weiterbildung sind die erste Leitung als eine mittels des Zündungsschalters geschaltete Leitung und/oder die zweite Leitung als eine ungeschaltete Leitung ausgebildet.

Gemäß einer bevorzugten Ausgestaltung der Erfindung ist/ist eine Strommesseinrichtung in dem Signalpfad der zweiten Leitung angeordnet, welche den Stromwert des auf der zweiten Leitung fließenden Stromes misst.

Gemäß einer weiteren bevorzugten Ausgestaltung weist die Steuereinrichtung auf:
- eine Pegelanpassungseinrichtung, welche die erste Spannung empfängt und die empfangene erste Spannung zu einem ersten logischen Pegel wandelt;
- eine Referenzspannungsquelle, welche eine Referenzspannung entsprechend eines vorbestimmten Schwellwertes für den Stromwert des auf der zweiten Leitung fließenden Stromes bereitstellt;
- einen Spannungskomparator, welcher eine den durch die Strommesseinrichtung gemessenen Stromwert entsprechende dritte Spannung mit der Referenzspannung zur Bereitstellung eines zweiten logischen Pegels vergleicht;
- ein ODER-Gatter, welches den ersten logischen Pegel und den zweiten logischen Pegel zur Bereitstellung eines dritten logischen Pegels logisch verodert; und
- eine Schalteinrichtung, insbesondere ein Transistor, welche an ihrem Steuereingang den dritten logischen Pegel empfängt und abhängig von dem empfangenen dritten logischen Pegel ein zweites Steuersignal zur Betätigung der Überbrückungseinrichtung bereitstellt.

Gemäß einer weiteren bevorzugten Ausgestaltung ist der erste logische Pegel ein positiver logischer Pegel, falls die erste Leitung mit der Versorgungsspannungsvorrichtung gekoppelt ist, und ein negativer logischer Pegel, falls die erste Leitung von der Versorgungsspannungseinrichtung entkoppelt ist. Vorzugsweise ist weiter der zweite logische Pegel ein positiver logischer Pegel, falls die den durch die Strommesseinrichtung gemessenen Stromwert entsprechende dritte Spannung größer als die Referenzspannung ist, und ein negativer logischer Pegel, falls die den durch die Strommesseinrichtung gemessenen Stromwert entsprechende dritte Spannung kleiner oder gleich der Referenzspannung ist.

Gemäß einer weiteren bevorzugten Weiterbildung ist ein Zeitglied vorgesehen, welches das Zeitvorgabesignal als einen vierten logischen Pegel bereitstellt, wobei das Zeitglied das Zeitvorgabesignal bei einem Öffnen des Zündungsschalter mittels einer fallenden Flanke der ersten Spannung auf der ersten Leitung auf einen positiven vierten logischen Pegel setzt und diesen so lange hält, bis ein Standby-Betrieb des Kraftfahrzeuges zumindest erreicht ist. Vorzugsweise ist das Zeitglied als ein Mono-Flop ausgebildet.

In der Ausgestaltung der erfindungsgemäßen Vorrichtung mit dem Zeitglied weist die Steuereinrichtung vorzugsweise auf:
- eine Pegelanpassungseinrichtung, welche die erste Spannung empfängt und die empfangene erste Spannung zu einem ersten logischen Pegel wandelt;
- ein ODER-Gatter, welches den ersten logischen Pegel und den vierten logischen Pegel zur Bereitstellung eines dritten logischen Pegels logisch verodert; und
- eine Schalteinrichtung, insbesondere einen Transistor, welche an ihrem Steuereingang den dritten logischen Pegel empfängt und abhängig von dem empfangenen dritten logischen Pegel ein zweites Steuersignal zur Betätigung der Überbrückungseinrichtung bereitstellt.

Gemäß einer weiteren bevorzugten Ausgestaltung ist der Schaltregler als ein linearer Schaltregler ausgebildet.

Gemäß einer weiteren bevorzugten Ausgestaltung ist der Schaltregler derart ausgestaltet, dass er seine Eingangsspannung auf eine Ausgangsspannung mit einem Wert der halben Eingangsspannung im Wesentlichen halbiert und einen Eingangsstrom auf einen Ausgangsstrom mit einem Wert des doppelten Eingangsstromes im Wesentlichen verdoppelt. Somit ist erfindungsgemäß eine annähernde Verdopplung der Stillstandszeit des Fahrzeuges durch eine Halbierung der Ruhestromaufnahme gegeben.

Gemäß einer weiteren bevorzugten Ausgestaltung ist der Schaltregler derart ausgestaltet, dass ein maximaler Ausgangsstrom des Schaltreglers wenigstens einer Standby-Stromaufnahme der an der zweiten Klemme angeschlossenen Geräte entspricht. Der maximale Ausgangsstrom beträgt vorzugsweise 10 bis 200 mA, bevorzugt 80 bis 120 mA, besonders bevorzugt 100 mA.

Gemäß einer weiteren bevorzugten Ausgestaltung ist die Versorgungsspannungsvorrichtung als eine Batterie des Kraftfahrzeuges ausgebildet.

Gemäß einer weiteren bevorzugten Weiterbildung sind/ist die erste Leitung mittels einer ersten Sicherung und/oder die zweite Leitung mittels einer zweiten Sicherung gesichert.

Die Erfindung wird nachfolgend anhand der in den schematischen Figuren angegebenen Ausführungsbeispielen näher erläutert. Es zeigen:
- Fig. 1: ein schematisches Blockschaltbild eines KfZ-Bordnetzes zur Versorgung mehrerer Steuergeräte;
- Fig. 2: ein schematisches Blockschaltbild eines Steuergerätes mit einem Schaltungsregler und einem Mikrocontroller;
- Fig. 3: ein schematisches Blockschaltbild eines Steuergerätes mit einem Schaltregler, einem Spannungsregler und einem Mikrocontroller;
- Fig. 4: ein schematisches Blockschaltbild eines ersten Ausführungsbeispiels eines Systems mit einer erfindungsgemäßen Vorrichtung zur Verringerung eines Ruhestromverbrauches eines Kraftfahrzeuges;
- Fig. 5: ein schematisches Blockschaltbild eines ersten Ausführungsbeispiels der Steuereinrichtung gemäß Figur 4;
- Fig. 6: schematische Signalverläufe beim Betrieb der erfindungsgemäßen Vorrichtung gemäß Figur 4;
- Fig. 7: ein schematisches Blockschaltbild eines zweiten Ausführungsbeispiels eines Systems mit einer erfindungsgemäßen Vorrichtung zur Verringerung des Ruhestromverbrauches eines Kraftfahrzeuges;
- Fig. 8: ein schematisches Blockschaltbild eines zweiten Ausführungsbeispiels der Steuereinrichtung gemäß Figur 7; und
- Fig. 9: ein schematisches Ablaufdiagramm eines bevorzugten Ausführungsbeispiels des erfindungsgemäßen Verfahrens zur Verringerung eines Ruhestromverbrauches eines Kraftfahrzeuges.

In allen Figuren sind gleiche beziehungsweise funktionsgleiche Elemente und Vorrichtungen - sofern nichts anderes angegeben ist - mit denselben Bezugszeichen versehen worden.

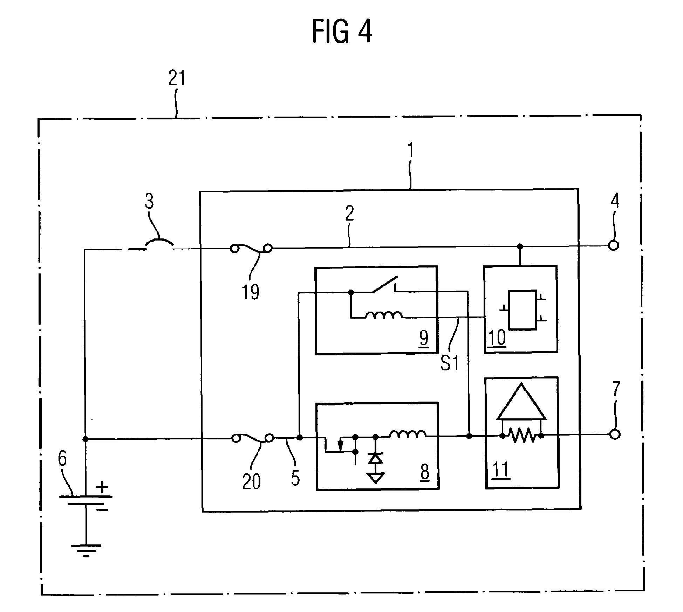

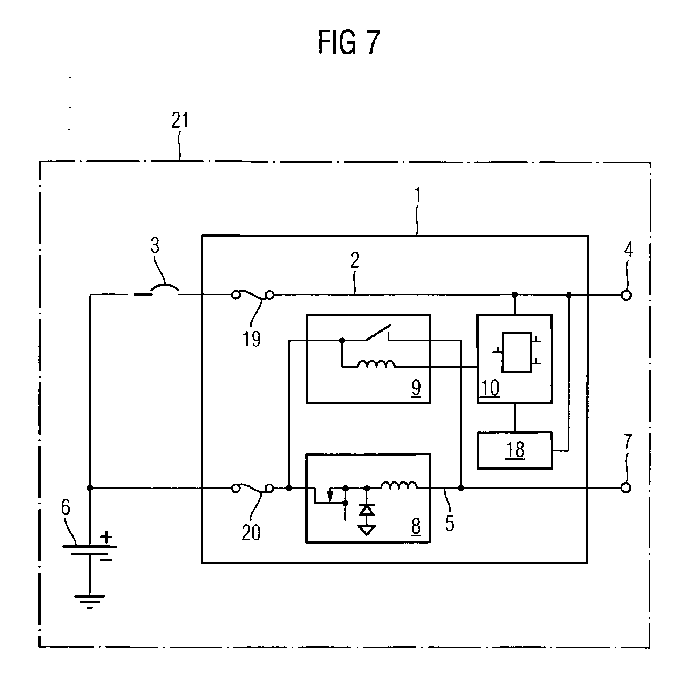

Die Figuren 4 und 7 zeigen jeweils ein schematisches Blockschaltbild eines ersten Ausführungsbeispiels beziehungsweise eines zweiten Ausführungsbeispiels eines Systems 21 mit einer erfindungsgemäßen Vorrichtung 1 zur Verringerung eines Ruhestromverbrauches eines Kraftfahrzeuges. Das erste Ausführungsbeispiel gemäß Figur 4 und das zweite Ausführungsbeispiel gemäß Figur 7 der erfindungsgemäßen Vorrichtung 1 haben folgende Merkmale gemein:
Die Vorrichtung 1 weist eine erste Leitung 2, eine zweite Leitung 5, einen Schaltregler 8, eine zu dem Schaltregler 8 parallel geschaltete, betätigbare Überbrückungseinrichtung 9 und eine Steuereinrichtung 10 auf. Mittels der ersten Leitung 2 sind ein Zündungsschalter 3 und eine erste Klemme 4 gekoppelt. Mittels der zweiten Leitung 5 sind eine Versorgungsspannungsvorrichtung 6, welche insbesondere als Batterie des Kraftfahrzeuges ausgebildet ist, und eine zweite Klemme 7 gekoppelt. Der Schaltregler 8 ist in einem Signalpfad der zweiten Leitung 5 angeordnet. Die Überbrückungseinrichtung 9 überbrückt den Schaltregler 8 in Abhängigkeit eines ersten Steuersignals S1.

Die Steuereinrichtung 10 generiert das erste Steuersignal S1 zum Betätigen der Überbrückungseinrichtung 9 in Abhängigkeit einer ersten Spannung U1, welche einer Potenzialdifferenz zwischen einem Potenzial an der ersten Klemme 4 und einem Massepotenzial entspricht, und/oder in Abhängigkeit eines Stromwertes I des auf der zweiten Leitung 5 fließenden Stromes und/oder in Abhängigkeit eines Zeitvorgabesignals T.

Vorzugsweise ist die Vorrichtung 1 gemäß dem ersten Ausführungsbeispiel nach Figur 4 und gemäß dem zweiten Ausführungsbeispiel nach Figur 7 als ein Sicherungskasten oder eine Intelligent-Switching-Unit des Kraftfahrzeuges ausgebildet. Die Überbrückungseinrichtung 9 ist dabei insbesondere als ein betätigbares Relais ausgebildet. Ferner ist die erste Leitung 2 insbesondere als eine mittels des Zündungsschalters 3 geschaltete Leitung ausgebildet. Des Weiteren ist vorzugsweise die zweite Leitung 5 als eine ungeschaltete Leitung ausgebildet.

Vorzugsweise ist der Schaltungsregler 8 als ein linearer Schaltregler ausgebildet. Weiterhin ist der Schaltregler 8 insbesondere derart ausgestaltet, dass er seine Eingangsspannung auf eine Ausgangsspannung mit einem Wert der halben Eingangsspannung im Wesentlichen halbiert und einen Eingangsstrom auf einen Ausgangsstrom mit einem Wert des doppelten Eingangsstroms im Wesentlichen verdoppelt.

Des Weiteren ist der Schaltregler 8 vorzugsweise derart ausgestaltet, dass ein maximaler Ausgangsstrom des Schaltreglers 8 wenigstens einer Standby-Stromaufnahme der an der zweiten Klemme 7 angeschlossenen Geräte entspricht.

Vorzugsweise ist die Versorgungsspannungsvorrichtung 6 als eine Batterie des Kraftfahrzeuges ausgebildet. Ferner sind/ist die erste Leitung 2 mittels einer ersten Sicherung 19 und/oder die zweite Leitung 5 mittels einer zweiten Sicherung 20 gesichert.

Die beiden Ausführungsbeispiele der Vorrichtung 1 nach den Figuren 4 und 7 unterscheiden sich insbesondere dahingehend, dass gemäß dem ersten Ausführungsbeispiel nach Figur 4 eine Strommesseinrichtung 11 und gemäß dem zweiten Ausführungsbeispiel gemäß Figur 7 ein Zeitglied 18 vorgesehen ist.

Gemäß dem ersten Ausführungsbeispiel nach Figur 4 ist die Strommesseinrichtung 11 in dem Signalpfad der zweiten Leitung 5 angeordnet, welche den Stromwert I des auf der zweiten Leitung 5 fließenden Stromes misst.

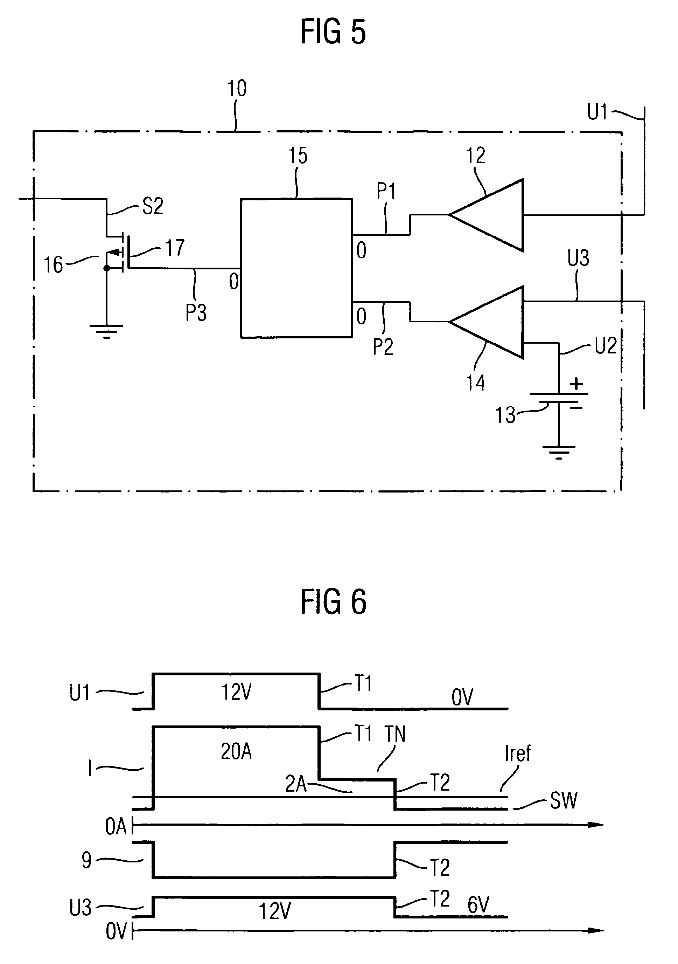

Gemäß dem ersten Ausführungsbeispiel der Vorrichtung 1 mit der Strommesseinrichtung 11 weist die Steuereinrichtung 10 vorzugsweise eine Pegelanpassungseinrichtung 12, eine Referenzspannungsquelle 13, einen Spannungskomparator 14, ein Oder-Gatter 15 und eine Schalteinrichtung 16 auf (siehe Figur 5). Die Pegelanpassungseinrichtung 12 empfängt die erste Spannung U1 und wandelt die empfangene erste Spannung U1 in einen ersten logischen Pegel P1. Die Referenzspannungsquelle 13 stellt eine Referenzspannung U2 entsprechend eines vorbestimmten Schwellwertes für den Stromwert I des auf der zweiten Leitung 5 fließenden Stromes bereit. Der Spannungskomparator 14 vergleicht eine dem durch die Strommesseinrichtung 11 gemessenen Stromwert I entsprechende dritte Spannung U3 mit der Referenzspannung U2 zur Bereitstellung eines zweiten logischen Pegels P2. Das ODER-Gatter 15 verodert den ersten logischen Pegel P1 und den zweiten logischen Pegel P2 zur Bereitstellung eines dritten logischen Pegels P3. Die Schalteinrichtung 16, welche insbesondere als ein Transistor ausgebildet ist, empfängt an ihrem Steuereingang 17 den dritten logischen Pegel P3 und stellt abhängig von dem empfangenen logischen Pegel P3 ein zweites Steuersignal S2 zur Betätigung der Überbrückungseinrichtung 9 bereit.

Vorzugsweise ist der erste logische Pegel P1 ein positiver logischer Pegel, falls die erste Leitung 2 mit der Versorgungsspannungsvorrichtung 6 gekoppelt, und ein negativer logischer Pegel, falls die erste Leitung 2 von der Versorgungsspannungsvorrichtung 6 entkoppelt ist. Weiter ist der zweite logische Pegel P2 ein positiver logischer Pegel, falls die dem durch die Strommesseinrichtung 11 gemessenen Stromwert I entsprechende dritte Spannung U3 größer als die Referenzspannung 2 ist und ein negativer logischer Pegel, falls die dem durch die Strommesseinrichtung 11 gemessenen Stromwert I entsprechende dritte Spannung U3 kleiner oder gleich der Referenzspannung U2 ist.

Dazu zeigt Figur 6 schematische Signalverläufe beim Betrieb der erfindungsgemäßen Vorrichtung 1 gemäß Figur 4. Dabei bezeichnet der Zeitpunkt T1 den Zeitpunkt, an dem das Fahrzeug abgestellt wird und der Zündungsschalter 3 die Batterieversorgung der ersten Leitung 2 unterbricht. Diese Unterbrechung wird - wie oben beschrieben - mittels der Steuereinrichtung 10 erkannt. Bedingt durch die Nachlaufphase TN der über die zweite Leitung 5 versorgten Steuergeräte ist der Strom auf dieser zweiten Leitung 5 für eine vorbestimmte Zeit, beispielsweise einige Minuten, noch etwas erhöht, etwa 1 bis 5 A, bevor dieser schließlich auf den Standby-Wert SW absinkt. Dabei bezeichnet die Zeitdifferenz zwischen T2 und T1 die Nachlaufphase TN.

Über die Strommesseinrichtung 11 kann die Steuereinrichtung 10 dies beobachten und den Strom mit einem unteren Schwellwert Iref vergleichen. Der untere Schwellwert Iref liegt dabei unterhalb dem Stromwert der Nachlaufphase TN, aber oberhalb des Standby-Stromes SW.

Insbesondere über die Verknüpfung aus fehlender Batteriespannung an der ersten Klemme 4 durch Detektion der ersten Spannung U1 und einem Unterschreiten des Schwellwertstromes Iref an der zweiten Klemme 7 kann die Steuereinrichtung 10 erkennen, dass sich das Fahrzeug oder Kraftfahrzeug im Standby-Betrieb befindet. Daraufhin wird die Überbrückungseinrichtung 9 abgeschaltet, was einem offenen Relais oder einer offenen Überbrückungseinrichtung 9 entspricht. Dazu hat die Überbrückungseinrichtung 9 ab dem Zeitpunkt T2 einen positiven logischen Pegel, welcher deren Auf-Zustand signalisiert.

Bei einer abgeschalteten Überbrückungseinrichtung 9 sinkt die Spannung an der zweiten Klemme 7 ab und der Schaltregler 8 beginnt zu arbeiten. Dies stabilisiert die Spannung an der zweiten Klemme 7 auf die oben erwähnten beispielhaften 6 V.

Somit werden die an der zweiten Leitung 7 verbundenen Steuergeräte ab dem Zeitpunkt T2 mit 6 V versorgt und der aus der Batterie 6 entnommene Ruhestrom halbiert sich annähernd. Figur 7 zeigt das schematische Blockschaltbild des zweiten Ausführungsbeispiels des Systems 21 mit der erfindungsgemäßen Vorrichtung 1. Das zweite Ausführungsbeispiel der erfindungsgemäßen Vorrichtung 1 unterscheidet sich dahingehend von dem ersten Ausführungsbeispiel gemäß Figur 4, dass auf die Strommesseinrichtung 11 verzichtet wird und ein Zeitglied 18 vorgesehen ist. Das Zeitglied 18 stellt das Zeitvorgabesignal T als einen vierten logischen Pegel P4 bereit. Dabei setzt das Zeitglied 18 das Zeitvorgabesignal T bei einem Öffnen des Zündungsschalters 3 mittels einer fallenden Flanke der ersten Spannung U1 auf der ersten Leitung 2 auf einem positiven logischen vierten Pegel P4 und hält diesen so lange, bis der Standby-Betrieb des Kraftfahrzeuges zumindest oder sicher erreicht ist.

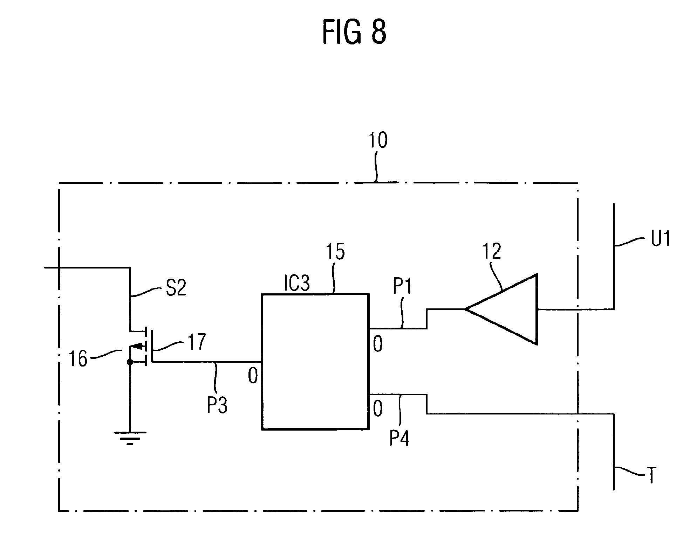

Dazu zeigt Figur 8 ein schematisches Blockschaltbild eines zweiten Ausführungsbeispiels der Steuereinrichtung 10 gemäß Figur 7 für die Vorrichtung 1 mit dem Zeitglied 18. Die Steuereinrichtung 10 gemäß Figur 8 weist eine Pegelanpassungseinrichtung 12, ein ODER-Gatter 15 und eine Schalteinrichtung 16 auf. Die Pegelanpassungseinrichtung 12 empfängt die erste Spannung U1 und wandelt die empfangene erste Spannung U1 zu einem ersten logischen Pegel P1. Das ODER-Gatter 15 verodert den ersten logischen Pegel P1 und den vierten logischen Pegel P4 zur Bereitstellung eines dritten logischen Pegels P3. Die Schalteinrichtung 16, welche insbesondere als ein Transistor ausgebildet ist, empfängt den dritten logischen Pegel P3 an ihrem Steuereingang 17 und stellt abhängig von dem empfangenen dritten logischen Pegel P3 ein zweites Steuersignal S2 zur Betätigung der Überbrückungseinrichtung 9 bereit.

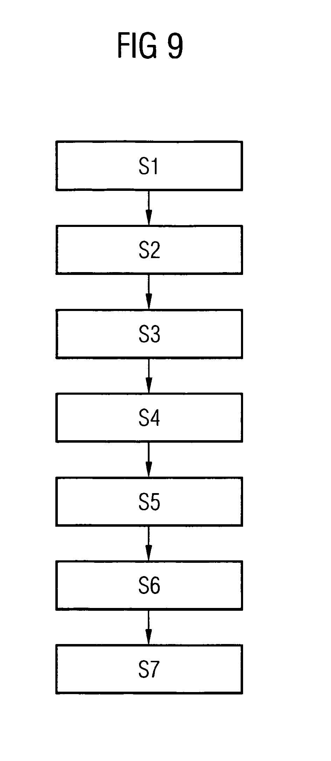

Figur 9 zeigt ein schematisches Ablaufdiagramm eines bevorzugten Ausführungsbeispiels des erfindungsgemäßen Verfahrens zur Verringerung eines Ruhestromverbrauches eines Kraftfahrzeuges. Nachfolgend wird das erfindungsgemäße Verfahren anhand des Blockschaltbildes in Figur 9 mit Bezug auf die Figuren 4 und 7 erläutert. Das erfindungsgemäße Verfahren gemäß Figur 9 weist folgende Verfahrensschritte S1 bis S7 auf:

### Verfahrensschritt S1:

Es wird eine erste Leitung 2 bereitgestellt, mittels welcher ein Zündungsschalter 3 und eine erste Klemme 4 koppelbar sind.

### Verfahrensschritt S2:

Es wird eine zweite Leitung 5 bereitgestellt, mittels welcher eine Versorgungsspannungsvorrichtung 6 und eine zweite Klemme 7 koppelbar sind.

### Verfahrensschritt S3:

Es wird ein Schaltregler 8 in einem Signalpfad der zweiten Leitung 5 angeordnet.

### Verfahrensschritt S4:

Eine betätigbare Überbrückungseinrichtung 9 wird parallel zu dem Schaltregler 8 geschaltet.

### Verfahrensschritt S5:

Ein erstes Steuersignal S1 wird zum Betätigen der Überbrückungseinrichtung 9 in Abhängigkeit einer ersten Spannung U1, welche einer Potenzialdifferenz zwischen einem Potenzial an der ersten Klemme 4 und einem Massepotenzial entspricht, und/oder in Abhängigkeit eines Stromwertes I des auf der zweiten Leitung 5 fließenden Stromes und/oder in Abhängigkeit eines Zeitvorgabesignals T generiert.

### Verfahrensschritt S6:

Die Überbrückungseinrichtung 9 wird mittels des generierten ersten Steuersignals S1 betätigt.

### Verfahrensschritt S7:

Der Schaltregler 8 wird mittels der betätigten Überbrückungseinrichtung 9 überbrückt, sodass der Schaltregler 8 in einem Standby-Betrieb des Kraftfahrzeuges überbrückt ist und in einem Normalbetrieb des Kraftfahrzeuges nicht überbrückt ist.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Beispielsweise ist denkbar, anstatt des Relais 9 gemäß der Figuren 4 und 7 einen anderen betätigbaren Schalter einzusetzen.

## Patentansprüche

1. Vorrichtung (1) zur Verringerung eines Ruhestromverbrauches eines Kraftfahrzeuges, mit:
a) einer ersten Leitung (2), mittels welcher ein Zündungsschalter (3) und eine erste Klemme (4) koppelbar sind;
b) einer zweiten Leitung (5), mittels welcher eine Versorgungsspannungsvorrichtung (6) und eine zweite Klemme (7) koppelbar sind; und
c) einem Schaltregler (8), welcher in einem Signalpfad der zweiten Leitung (5) angeordnet ist; diese Vorrichtung ist **dadurch gekennzeichnet, dass**
d) eine zu dem Schaltregler (8) parallel geschalteten, betätigbaren Überbrückungseinrichtung (9), welche den Schaltregler (8) in Abhängigkeit eines ersten Steuersignals (S1) überbrückt; und
e) eine Steuereinrichtung (10), welche das erste Steuersignal (S1) zum Betätigen der Überbrückungseinrichtung (9) in Abhängigkeit einer ersten Spannung (U1), die einer Potenzialdifferenz zwischen einem Potenzial an der ersten Klemme (4) und einem Massepotenzial entspricht, und/oder eines Stromwertes (I) des auf der zweiten Leitung (5) fließenden Stromes und/oder eines Zeitvorgabesignals (T) generiert.

2. Vorrichtung nach Anspruch 1,
**dadurch gekennzeichnet,**
**dass** die Vorrichtung (1) als ein Sicherungskasten oder eine Intelligent-Switching-Unit des Kraftfahrzeuges und/oder die Überbrückungseinrichtung (9) als ein Relais und/oder die erste Leitung (2) als eine mittels des Zündungsschalters (3) geschaltete Leitung und/oder die zweite Leitung (5) als eine ungeschaltete Leitung ausgebildet sind/ist.

3. Vorrichtung nach Anspruch 1 oder 2,
**dadurch gekennzeichnet,**
**dass** eine Strommesseinrichtung (11) in dem Signalpfad der zweiten Leitung (5) angeordnet ist, welche den Stromwert (I) des auf der zweiten Leitung (5) fließenden Stromes misst.

4. Vorrichtung nach Anspruch 3,
**dadurch gekennzeichnet,**
**dass** die Steuereinrichtung (10) aufweist:
a) eine Pegelanpassungseinrichtung (12), welche die erste Spannung (U1) empfängt und die empfangene erste Spannung (U1) zu einem ersten logischen Pegel (P1) wandelt;
b) eine Referenzspannungsquelle (13), welche eine Referenzspannung (U2) entsprechend eines vorbestimmten Schwellwertes (Iref) für den Stromwert (I) des auf der zweiten Leitung fließenden Stromes bereitstellt;
c) einen Spannungskomparator (14), welcher eine den durch die Strommesseinrichtung (11) gemessenen Stromwert (I) entsprechende dritte Spannung (U3) mit der Referenzspannung (U2) zur Bereitstellung eines zweiten logischen Pegels (P2) vergleicht;
d) ein ODER-Gatter (15), welches den ersten logischen Pegel (P1) und den zweiten logischen Pegel (P2) zur Bereitstellung eines dritten logischen Pegels (P3) logisch verodert; und
e) eine Schalteinrichtung (16), insbesondere ein Transistor, welche an ihrem Steuereingang (17) den dritten logischen Pegel (P3) empfängt und abhängig von dem empfangenen dritten logischen Pegel (P3) ein zweites Steuersignal (S2) zur Betätigung der Überbrückungseinrichtung (9) bereitstellt.

5. Vorrichtung nach Anspruch 4,
**dadurch gekennzeichnet,**
**dass** der erste logische Pegel (P1) ein positiver logischer Pegel ist, falls die erste Leitung (2) mit der Versorgungsspannungsvorrichtung (6) gekoppelt ist, und ein negativer logischer Pegel ist, falls die erste Leitung (2) von der Versorgungsspannungsvorrichtung (6) entkoppelt ist, und/oder dass der zweite logische Pegel (P2) ein positiver logischer Pegel ist, falls die dem durch die Strommesseinrichtung (11) gemessenen Stromwert (I) entsprechende dritte Spannung (U3) größer als die Referenzspannung (U2) ist, und ein negativer logischer Pegel ist, falls die dem durch die Strommesseinrichtung (11) gemessenen Stromwert (I) entsprechende dritte Spannung (U3) kleiner oder gleich der Referenzspannung (U2) ist.

6. Vorrichtung nach Anspruch 1 oder 2,
**dadurch gekennzeichnet,**
**dass** ein Zeitglied (18) vorgesehen ist, welches das Zeitvorgabesignal (T) als einen vierten logischen Pegel (P4) bereitstellt, wobei das Zeitglied (18) das Zeitvorgabesignal (T) bei einem Öffnen des Zündungsschalters (3) mittels einer fallenden Flanke der ersten Spannung (U1) auf der ersten Leitung (2) auf einen positiven vierten logischen Pegel (P4) setzt und diesen solange hält, bis ein Standby-Betrieb des Kraftfahrzeuges zumindest erreicht ist.

7. Vorrichtung nach Anspruch 6,
**dadurch gekennzeichnet,**
**dass** die Steuereinrichtung (10) aufweist:
a) eine Pegelanpassungseinrichtung (12), welche die erste Spannung (U1) empfängt und die empfangene erste Spannung (U1) zu einem ersten logischen Pegel (P1) wandelt;
b) ein ODER-Gatter (15), welches den ersten logischen Pegel (P1) und den vierten logischen Pegel (P4) zur Bereitstellung eines dritten logischen Pegels (P3) logisch verodert; und
c) eine Schalteinrichtung (16), insbesondere ein Transistor, welche an ihrem Steuereingang (17) den dritten logischen Pegel (P3) empfängt und abhängig von dem empfangenen dritten logischen Pegel (P3) ein zweites Steuersignal (S2) zur Betätigung der Überbrückungseinrichtung (9) bereitstellt.

8. Vorrichtung nach Anspruch 1 oder einem oder mehreren der Ansprüche 2 bis 7,
**dadurch gekennzeichnet,**
**dass** der Schaltregler (8) als ein linearer Schaltregler ausgebildet ist.

9. Vorrichtung nach Anspruch 1 oder einem oder mehreren der Ansprüche 2 bis 8,
**dadurch gekennzeichnet,**
**dass** der Schaltregler (8) derart ausgestaltet ist, dass er eine Eingangsspannung auf eine Ausgangsspannung mit einem Wert der halben Eingangsspannung im Wesentlichen halbiert und einen Eingangsstrom auf einen Ausgangsstrom mit einem Wert des doppelten Eingangsstromes im Wesentlichen verdoppelt.

10. Vorrichtung nach Anspruch 1 oder einem oder mehreren der Ansprüche 2 bis 9,
**dadurch gekennzeichnet,**
**dass** der Schaltregler (8) derart ausgestaltet ist, dass ein maximaler Ausgangsstrom des Schaltreglers (8) wenigstens einer Standby-Stromaufnahme der an der zweiten Klemme (7) angeschlossenen Geräte entspricht.

11. Vorrichtung nach Anspruch 1 oder einem oder mehreren der Ansprüche 2 bis 10,
**dadurch gekennzeichnet,**
**dass** die Versorgungsspannungsvorrichtung (6) als eine Batterie des Kraftfahrzeuges ausgebildet ist.

12. Vorrichtung nach Anspruch 1 oder einem oder mehreren der Ansprüche 2 bis 11,
**dadurch gekennzeichnet,**
**dass** die erste Leitung (2) mittels eine ersten Sicherung (19) und/oder die zweite Leitung (5) mittels einer zweiten Sicherung (20) gesichert sind/ist.

13. System (21) zur Verringerung eines Ruhestromverbrauches eines Kraftfahrzeuges, mit:
a) einer Vorrichtung (1) nach einem oder mehreren der Ansprüche 1 bis 12;
b) einer Versorgungsspannungsvorrichtung (6), welche mit der ersten Leitung (2) und mit der zweiten Leitung (5) der Vorrichtung (1) gekoppelt ist; und
c) einem Zündungsschalter (3), welcher zwischen der ersten Leitung (2) der Vorrichtung (1) und der Versorgungsspannungsvorrichtung (6) angeordnet ist.

14. Verfahren zur Verringerung eines Ruhestromverbrauches eines Kraftfahrzeuges, mit den Schritten:
a) Bereitstellen einer ersten Leitung (2), mittels welcher ein Zündungsschalter (3) und eine erste Klemme (4) koppelbar sind;
b) Bereitstellen einer zweiten Leitung (5), mittels welcher eine Versorgungsspannungsvorrichtung (6) und eine zweite Klemme (7) koppelbar sind;
c) Anordnen eines Schaltreglers (8) in einem Signalpfad der zweiten Leitung (5);
d) Parallel Schalten einer betätigbaren Überbrückungseinrichtung (9) zu dem Schaltregler (8);
e) Generieren eines ersten Steuersignals (S1) zum Betätigen der Überbrückungseinrichtung (9) in Abhängigkeit einer ersten Spannung (U1), die einer Potenzialdifferenz zwischen einem Potenzial an der ersten Klemme (4) und einem Massepotenzial entspricht, und/oder eines Stromwertes (I) des auf der zweiten Leitung (5) fließenden Stromes und/oder eines Zeitvorgabesignals (T);
f) Betätigen der Überbrückungseinrichtung (9) mittels des generierten ersten Steuersignals (S1); und
g) Überbrücken des Schaltreglers (8) mittels der betätigten Überbrückungseinrichtung (9).

## Claims

1. Device (1) for reducing the consumption of closed-circuit current of a motor vehicle, having:
a) a first line (2) by means of which an ignition switch (3) and a first terminal (4) can be coupled;
b) a second line (5) by means of which a supply voltage device (6) and a second terminal (7) can be coupled and
c) a switching controller (8) disposed in a signal path of the second line (5);
said device being **characterised by**
d) an actuatable bridging device (9) that is connected in parallel with the switching controller (8) and bridges the switching controller (8) as a function of a first control signal (S1); and
e) a control device (10) that generates the first control signal (S1) for actuating the bridging device (9) as a function of a first voltage (U1) corresponding to a difference in potential between a potential at the first terminal (4) and a ground potential and/or of a current value (I) of the current flowing on the second line (5) and/or of a time allowance signal (T).

2. Device according to claim 1,
**characterised in that**
the device (1) is embodied as a fuse box or an intelligent switching unit of the motor vehicle and/or the bridging device (9) is embodied as a relay and/or the first line (2) is embodied as a line switched by means of the ignition switch (3) and/or the second line (5) is embodied as a non-switched line.

3. Device according to claim 1 or 2,
**characterised in that**
a current measuring device (11) is disposed in the signal path of the second line (5) that measures the current value (I) of the current flowing on the second line (5).

4. Device according to claim 3,
**characterised in that**
the control device (10) has:
a) a level adapting device (12) that receives the first voltage (U1) and converts the received first voltage (U1) into a first logic level (P1);
b) a reference voltage source (13) that provides a reference voltage (U2) corresponding to a predefined threshold value (Iref) for the current value (I) of the current flowing on the second line;
c) a voltage comparator (14) that compares a third voltage (U3) corresponding to the current value (I) measured by the current measuring device (11) with the reference voltage (U2) for providing a second logic level (P2);
d) an OR gate (15) that logically ORs the first logic level (P1) and the second logic level (P2) for providing a third logic level (P3); and
e) a switching device (16), in particular a transistor, which receives the third logic level (P3) at its control input (17) and as a function of the received third logic level (P3) provides a second control signal (S2) for actuating the bridging device (9).

5. Device according to claim 4,
**characterised in that**
the first logic level (P1) is a positive logic level if the first line (2) is coupled to the supply voltage device (6) and a negative logic level if the first line (2) is decoupled from the supply voltage device (6) and/or the second logic level (P2) is a positive logic level if the third voltage (U3) corresponding to the current value (I) measured by the current measuring device (11) is greater than the reference voltage (U2) and a negative logic level if the third voltage (U3) corresponding to the current value (I) measured by the current measuring device (11) is less than or equal to the reference voltage (U2).

6. Device according to claim 1 or 2,
**characterised in that**
a timing element (18) is provided that provides the time allowance signal (T) as a fourth logic level (P4), with the timing element (18) setting the time allowance signal (T) to a positive fourth logic level (P4) when the ignition switch (3) is opened by means of a falling edge of the first voltage (U1) on the first line (2) and maintaining said level until a standby mode of the motor vehicle has been attained.

7. Device according to claim 6,
**characterised in that**
the control device (10) has:
a) a level adapting device (12) that receives the first voltage (U1) and converts the received first voltage (U1) into a first logic level (P1);
b) an OR gate (15) that logically ORs the first logic level (P1) and the second logic level (P2) for providing a third logic level (P3); and
c) a switching device (16), in particular a transistor, which receives the third logic level (P3) at its control input (17) and as a function of the received third logic level (P3) provides a second control signal (S2) for actuating the bridging device (9).

8. Device according to claim 1 or in one or more of claims 2 to 7,
**characterised in that**
the switching controller (8) is embodied as a linear switching controller.

9. Device according to claim 1 or in one or more of claims 2 to 8,
**characterised in that**
the switching controller (8) is embodied in such a way that it essentially halves an input voltage to an output voltage having a value of half the input voltage and essentially doubles an input current to an output current having a value of double the input current.

10. Device according to claim 1 or in one or more of claims 2 to 9,
**characterised in that**
the switching controller (8) is embodied such that a maximum output current of the switching controller (8) corresponds at least to a standby current consumption of the devices connected to the second terminal (7).

11. Device according to claim 1 or in one or more of claims 2 to 10,
**characterised in that**
the supply voltage device (6) is embodied as a battery of the motor vehicle.

12. Device according to claim 1 or in one or more of claims 2 to 11,
**characterised in that**
the first line (2) is protected by means of a first fuse (19) and/or the second line (5) by means of a second fuse (20).

13. System (21) for reducing the consumption of closed-circuit current of a motor vehicle, having:
a) a device (1) according to one or more of claims 1 to 12;
b) a supply voltage device (6) coupled to the first line (2) and second line (5) of the device (1); and
c) an ignition switch (3) disposed between the first line (2) of the device (1) and the supply voltage device (6).

14. Method for reducing the consumption of closed-circuit current of a motor vehicle, comprising the steps:
a) providing a first line (2) by means of which an ignition switch (3) and a first terminal (4) can be coupled;
b) providing a second line (5) by means of which a supply voltage device (6) and a second terminal (7) can be coupled;
c) disposing a switching controller (8) in a signal path of the second line (5);
d) connecting an actuatable bridging device (9) in parallel with the switching controller (8);
e) generating a first control signal (S1) for actuating the bridging device (9) as a function of a first voltage (U1) corresponding to a difference in potential between a potential at the first terminal (4) and a ground potential and/or of a current value (I) of the current flowing on the second line (5) and/or of a time allowance signal (T);
f) actuating the bridging device (9) by means of the generated first control signal (S1); and
g) bridging the switching controller (8) by means of the actuated bridging device (9).

## Revendications

1. Dispositif (1) pour diminuer une consommation de courant de repos d'un véhicule automobile, comprenant :
a) une première ligne (2), au moyen de laquelle peuvent être couplés un commutateur d'allumage (3) et une première borne de connexion (4) ;
b) une seconde ligne (5), au moyen de laquelle peuvent être couplés un dispositif de tension d'alimentation (6) et une seconde borne de connexion (7) ; et
c) un régulateur de commutation (8), qui est agencé sur un chemin de signal de la seconde ligne (5) ;
ce dispositif étant **caractérisé en ce que**
d) un dispositif de court-circuit (9) actionnable estmonté en parallèle avec le régulateur de commutation (8), et court-circuite le régulateur de commutation (8) en fonction d'un premier signal de commande (S1) ; et **en ce que**
e) un dispositif de commande (10) génère le premier signal de commande (S1) pour actionner le dispositif de court-circuit (9) en fonction d'une première tension (U1), qui correspond à une différence de potentiel entre un potentiel sur la première borne de connexion (4) et un potentiel de masse, et/ou d'une valeur (I) ducourantpassant sur la seconde ligne (5), et/ou d'un signal de temps alloué (T).

2. Dispositif selon la revendication 1,
**caractérisé en ce que**
ledispositif (1) se présente sous la forme d'uneboîte à fusibles ou d'une unité de commutation intelligente du véhicule automobile et/ou le dispositif de court-circuit (9) se présente sous la forme d'un relais et/ou la première ligne (2) se présente sous la forme d'une ligne commutée au moyen du commutateur d'allumage (3) et/ou la seconde ligne (5) se présente sous la forme d'une ligne non commutée.

3. Dispositif selon la revendication 1 ou 2,
**caractérisé en ce que**
un dispositif de mesure de courant (11) est agencé dans le chemin de signal de la seconde ligne (5), lequel dispositif mesure la valeur (I) du courant passant dans la seconde ligne (5).

4. Dispositif selon la revendication 3,
**caractérisé en ce que**
le dispositif de commande (10) présente :
a) un dispositif d'ajustement de niveau (12) qui reçoit la première tension (U1) et convertit la première tension reçue (U1) en un premier niveau logique (P1) ;
b) une source de tension de référence (13) qui fournit une tension de référence (U2) en fonction d'une valeur de seuil prédéterminée (Iréf.) pour la valeur (I) du courant passant dans la seconde ligne ;
c) un comparateur de tension (14) qui compare une troisième tension (U3) correspondant à la valeur de courant (I) mesurée par le dispositif de mesure de courant (11) à la tension de référence (U2) pour fournir un deuxième niveau logique (P2) ;
d) une porte OU (15) qui traite logiquement selon l'opérateur OU le premier niveau logique (P1) et le deuxième niveau logique (P2) pour fournir un troisième niveau logique (P3) ; et
e) un dispositif de commutation (16), en particulier un transistor, qui reçoit à son entrée de commande (17) le troisième niveau logique (P3) et, en fonction du troisième niveau logique reçu (P3), fournit un second signal de commande (S2) pour actionner le dispositif de court-circuit (9).

5. Dispositif selon la revendication 4,
**caractérisé en ce que**
le premier niveau logique (P1) est un niveau logique positif si la première ligne (2) est couplée au dispositif de tension d'alimentation (6), et un niveau logique négatif si la première ligne (2) est désaccouplée du dispositif de tension d'alimentation (6), et/ou **en ce que** le deuxième niveau logique (P2) est un niveau logique positif si la troisième tension (U3) correspondant à la valeur de courant (I) mesurée par le dispositif de mesure de courant (11) est supérieure à la tension de référence (U2), et un niveau logique négatif si la troisième tension (U3) correspondant à la valeur de courant (I) mesurée par le dispositif de mesure de courant (11) est inférieure ou égale à la tension de référence (U2).

6. Dispositif selon la revendication 1 ou 2,
**caractérisé en ce que**
il est prévu un système temporisé (18) qui fournit le signal de temps alloué (T) comme étant un quatrième niveau logique (P4), dans lequel le système temporisé (18) règle le signal de temps alloué (T) à un quatrième niveau logique (P4) positif lors d'une ouverture du commutateur d'allumage (3) au moyen d'un front descendant de la première tension (U1) sur la première ligne (2) et le maintient jusqu'à ce qu'un fonctionnement de réserve du véhicule automobile soit au moins atteint.

7. Dispositif selon la revendication 6,
**caractérisé en ce que**
le dispositif de commande (10) présente :
a) un dispositif d'ajustement de niveau (12) qui reçoit la première tension (U1) et convertit la première tension reçue (U1) en un premier niveau logique (P1) ;
b) une porte OU (15) qui traite logiquement selon l'opérateur OU le premier niveau logique (P1) et le quatrième niveau logique (P4) pour fournir un troisième niveau logique (P3) ; et
c) un dispositif de commutation (16), en particulier un transistor, qui reçoit à son entrée de commande (17) le troisième niveau logique (P3) et, en fonction du troisième niveau logique reçu (P3), fournit un second signal de commande (S2) pour actionner le dispositif de pontage (9) .

8. Dispositif selon la revendication 1 ou selon une ou plusieurs des revendications 2 à 7,
**caractérisé en ce que**
le régulateur de commutation (8) se présente sous la forme d'un régulateur de commutation linéaire.

9. Dispositif selon la revendication 1 ou selon une ou plusieurs des revendications 2 à 8,
**caractérisé en ce que**
le régulateur de commutation (8) est conçu de sorte qu'il réduise sensiblement de moitié une tension d'entrée à une tension de sortie avec une valeur de la demi-tension d'entrée et double sensiblement un courant d'entrée à un courant de sortie avec une valeur du courant d'entrée double.

10. Dispositif selon la revendication 1 ou selon une ou plusieurs des revendications 2 à 9,
**caractérisé en ce que**
le régulateur de commutation (8) est conçu de sorte qu'un courant de sortie maximal du régulateur de commutation (8) corresponde au moins à un courant absorbé de réserve des appareils connectés à la seconde borne (7).

11. Dispositif selon la revendication 1 ou selon une ou plusieurs des revendications 2 à 10,
**caractérisé en ce que**
le dispositif de tension d'alimentation (6) se présente sous la forme d'une batterie du véhicule automobile.

12. Dispositif selon la revendication 1 ou selon une ou plusieurs des revendications 2 à 11,
**caractérisé en ce que**
la première ligne (2) est sécurisée au moyen d'un premier fusible de sécurité (19) et/ou la seconde ligne (5) est sécurisée au moyen d'un second fusible de sécurité (20).

13. Système (21) pour diminuer une consommation de courant de repos d'un véhicule automobile, comprenant :
a) un dispositif (1) selon une ou plusieurs des revendications 1 à 12 ;
b) un dispositif de tension d'alimentation (6), qui est couplé à la première ligne (2) et à la seconde ligne (5) du dispositif (1) ; et
c) un commutateur d'allumage (3), qui est agencé entre la première ligne (2) du dispositif (1) et le dispositif de tension d'alimentation (6).

14. Procédé pour diminuer une consommation de courant de repos d'un véhicule automobile, comprenant les étapes consistant à :
a) mettre en place une première ligne (2), au moyen de laquelle peuvent être couplés un commutateur d'allumage (3) et une première borne de connexion (4) ;
b) mettre en place une seconde ligne (5), au moyen de laquelle peuvent être couplés un dispositif de tension d'alimentation (6) et une seconde borne de connexion (7) ;
c) agencer un régulateur de commutation (8) sur un chemin de signal de la second ligne (5) ;
d) monter un dispositif de court-circuit (9) actionnable en parallèle avec le régulateur de commutation (8) ;
e) générer un premier signal de commande (S1) pour actionner le dispositif de court-circuit (9) en fonction d'une première tension (U1), qui correspond à une différence de potentiel entre un potentiel sur la première borne de connexion (4) et un potentiel de masse, et/ou d'une valeur (I) du courant passant sur la seconde ligne (5) et/ou d'un signal de temps alloué (T) ;
f) actionner le dispositif de court-circuit (9) au moyen du premier signal de commande (S1) généré ; et
g) court-circuiter le régulateur de commutation (8) au moyen du dispositif de court-circuit (9) actionné.
